# EUROPÄISCHE PATENTANMELDUNG

(11) **EP 2 527 157 A1**
(43) Veröffentlichungstag der Anmeldung: **28.11.2012**
(21) Anmeldenummer: 11167375.2
(22) Anmeldetag: 24.05.2011
(51) Int. Cl.: B41M 5/52, D06M 15/256, D06M 15/564, D06M 15/70, C03C 25/20, D06N 7/00

(54) **Beschichtetes bedruckbares Textil-Netzgewebe oder Textil-Netzgewirke sowie Verfahren zu dessen Herstellung**

(71) Anmelder: Verseidag-Indutex Gesellschaft mit beschränkter Haftung, 47803 Krefeld (DE)
(72) Erfinder: Siemens, Peter Michael, D-47906 Kempen (DE)
(74) Vertreter: DR. STARK & PARTNER

(57) **Zusammenfassung**

Die Erfindung betrifft unter anderem ein Verfahren zur Herstellung eines beschichteten bedruckbaren Textil-Netzgewebes oder Textil-Netzgewirkes.

Um ein Verfahren anzugeben, das einfacher und damit zeit-und kosteneffektiver ausgestaltet ist, soll das Textil-Netzgewebe oder Textil-Netzgewirke zunächst durch ein Bad mit einem flüssigen Beschichtungsmaterial, insbesondere einer wässrigen Dispersion, geführt werden, wodurch das Beschichtungsmaterial an dem Textil-Netzgewebe oder Textil-Netzgewirke anhaftet und die Öffnungen darin verschließt, und dass anschließend das Textil-Netzgewebe oder Textil-Netzgewirke von einer Seite des Textil-Netzgewebes oder Textil-Netzgewirkes zumindest partiell mit einem Luftstrom derart beaufschlagt wird, dass in diesem mit dem Luftstrom beaufschlagten Bereich die durch das Beschichtungsmaterial verschlossenen Öffnungen in dem Textil-Netzgewebe oder Textil-Netzgewirke wieder geöffnet werden, und dass danach das Textil-Netzgewebe oder Textil-Netzgewirke zur insbesondere vollständigen Trocknung des Beschichtungsmaterials durch einen Trockenofen geführt wird.

## Beschreibung

Die Erfindung betrifft ein Verfahren zur Herstellung eines beschichteten bedruckbaren Textil-Netzgewebes oder Textil-Netzgewirkes.

Aus der Praxis sind derartige Verfahren bekannt, die jedoch mehrstufig verlaufen, weil für eine gute Druckqualität die Beschichtung noch mit einer zusätzlichen Lackierung versehen werden muss. Nachteilig hierbei ist, dass hierdurch ein entsprechenden hoher Aufwand resultiert, der sich auch kostenmäßig nachteilig auswirkt.

Aufgabe der Erfindung ist es, die vorgenannten Nachteile zu vermeiden und ein Verfahren der eingangs genannten Art anzugeben, das einfacher und damit zeit- und kosteneffektiver ausgestaltet ist.

Die der Erfindung zugrunde liegenden Aufgabe wird dadurch gelöst, dass das Textil-Netzgewebe oder Textil-Netzgewirke zunächst durch ein Bad mit einem flüssigen Beschichtungsmaterial, insbesondere einer wässrigen Dispersion, geführt wird, wodurch das Beschichtungsmaterial an dem Textil-Netzgewebe oder Textil-Netzgewirke anhaftet und die Öffnungen darin verschließt. Anschließend wird das Textil-Netzgewebe oder Textil-Netzgewirke dann von einer Seite des Textil-Netzgewebes oder Textil-Netzgewirkes zumindest partiell mit einem Luftstrom derart beaufschlagt, dass in diesem mit dem Luftstrom beaufschlagten Bereich die durch das Beschichtungsmaterial verschlossenen Öffnungen in dem Textil-Netzgewebe oder Textil-Netzgewirke wieder geöffnet werden, und danach wird das Textil-Netzgewebe oder Textil-Netzgewirke zur insbesondere vollständigen Trocknung des Beschichtungsmaterials durch einen Trockenofen geführt.

Hierdurch kann eine gezielte Steuerung von offenen und geschlossenen Öffnungen in dem Textil-Netzgewebe oder Textil-Netzgewirke erfolgen. Da das Beschichtungsmaterial, welches zunächst die erneut geöffneten Öffnungen verschlossen hatte, im Wesentlichen an dem Textil-Netzgewebe oder Textil-Netzgewirke verbleibt und sich an das Material des Textil-Netzgewebes oder Textil-Netzgewirkes anlegt, ist das Gewicht unabhängig von dem Zustand der Öffnungen bis auf eine Abweichung von ca. 10% bis 20% einheitlich.

Bei dem erfindungsgemäßen Verfahren kann auf zumindest einer Seite des Textil-Netzgewebes oder Textil-Netzgewirkes ein Teil des dort nach dem Durchführen durch das Bad anhaftenden Beschichtungsmaterials durch einen Rakel oder dergleichen entfernt werden, wodurch auch ohne genaue Anpassung des Beschichtungsmaterials die Beschichtungsstärke steuerbar ist.

Die Erfindung betrifft weiterhin ein Verfahren zur Herstellung eines beschichteten bedruckbaren Textil-Netzgewebes oder Textil-Netzgewirkes, wobei das Textil-Netzgewebe oder Textil-Netzgewirke zunächst mittels eines so genannten Flatsch-Auftrages durch Führen über eine teilweise in einem Bad mit einem flüssigen Beschichtungsmaterial befindliche Auftragswalze mit dem an der Auftragswalze anhaftenden flüssigen Beschichtungsmaterial, insbesondere einer wässrigen Dispersion, beschichtet wird, wobei das an dem Textil-Netzgewebe oder Textil-Netzgewirke anhaftende Beschichtungsmaterial die Öffnungen darin verschließt, und dass anschließend das Textil-Netzgewebe oder Textil-Netzgewirke von einer Seite des Textil-Netzgewebes oder Textil-Netzgewirkes zumindest partiell mit einem Luftstrom derart beaufschlagt wird, dass in diesem mit dem Luftstrom beaufschlagten Bereich die durch das Beschichtungsmaterial verschlossenen Öffnungen in dem Textil-Netzgewebe oder Textil-Netzgewirke wieder geöffnet werden, und dass danach das Textil-Netzgewebe oder Textil-Netzgewirke zur insbesondere vollständigen Trocknung des Beschichtungsmaterials durch einen Trockenofen geführt wird.

Auch kann auf zumindest einer Seite des Textil-Netzgewebes oder Textil-Netzgewirkes ein Teil des dort nach dem Führen über die Auftragswalze anhaftenden Beschichtungsmaterials durch wenigstens eine Egalisierungswalze oder dergleichen entfernt oder zumindest gleichmäßig verteilt werden, wodurch aus dem Tauchbad-Auftrag resultierende Ungenauigkeiten bei dem Auftrag des Beschichtungsmaterials ausgeglichen werden.

Weiterhin kann die von dem Luftstrom auf das Textil-Netzgewebe oder Textil-Netzgewirke wirkende Kraft oberhalb der Oberflächenspannung des verwendeten Beschichtungsmaterials liegen, so dass sicher ein Öffnen des Beschichtungsmaterials, welches die Öffnung in dem Textil-Netzgewebe oder Textil-Netzgewirke verschließt, erfolgt.

Ferner kann in dem Bereich, in dem die eine Seite des Textil-Netzgewebe oder Textil-Netzgewirke zumindest partiell durch den Luftstrom beaufschlagt ist, eine die andere Seite des Textil-Netzgewebes oder Textil-Netzgewirkes beaufschlagende Stützung durch einen weiteren Luftstrom erfolgen, so dass ein Flattern oder ggf. sogar ein Kontakt mit Teilen der Beschichtungsvorrichtung, reduziert oder vermieden wird.

Dabei kann die von dem weiteren Luftstrom auf das Textil-Netzgewebe oder Textil-Netzgewirke wirkende Kraft unterhalb der Oberflächenspannung des verwendeten Beschichtungsmaterials liegen, so dass ein Öffnen des Beschichtungsmaterials, welches die Öffnung in dem Textil-Netzgewebe oder Textil-Netzgewirke verschließt, durch den weiteren Luftstrom nicht erfolgt.

Die Erfindung betrifft weiterhin eine Vorrichtung zur Herstellung eines beschichteten bedruckbaren Textil-Netzgewebes oder Textil-Netzgewirkes, insbesondere zur Durchführung des erfindungsgemäßen Verfahrens, wobei die Vorrichtung ein Bad mit einem flüssigen Beschichtungsmaterial, insbesondere einer wässrigen Dispersion, aufweist, durch welches das Textil-Netzgewebe oder Textil-Netzgewirke mittels einer entsprechenden Führungsanordnung zunächst durchführbar ist, wobei das Beschichtungsmaterial derart ausgebildet ist, dass es an dem Textil-Netzgewebe oder Textil-Netzgewirke anhaftet und die Öffnungen darin verschließt, dass die Vorrichtung weiterhin eine Luftbeaufschlagungsvorrichtung aufweist, an der das Textil-Netzgewebe oder Textil-Netzgewirke nach erfolgter Beschichtung mit dem Beschichtungsmaterial vorbeiführbar ist, wobei diese Luftbeaufschlagungsvorrichtung derart ausgebildet und angeordnet ist, dass das Textil-Netzgewebe oder Textil-Netzgewirke von einer Seite zumindest partiell mit einem Luftstrom derart beaufschlagbar ist, dass in diesem mit dem Luftstrom beaufschlagten Bereich eine erneute Öffnung der durch das Beschichtungsmaterial bisher verschlossenen Öffnungen in dem Textil-Netzgewebe oder Textil-Netzgewirke gegeben ist, und dass die Vorrichtung zudem einen Trockenofen umfasst, durch den das Textil-Netzgewebe oder Textil-Netzgewirke nach erfolgter Beschichtung und zumindest partiell erfolgter Beaufschlagung mit einem Luftstrom zur insbesondere vollständigen Trocknung des Beschichtungsmaterials führbar ist.

Dabei kann zwischen Bad und Luftbeaufschlagungsvorrichtung auf zumindest einer Seite des Textil-Netzgewebes oder Textil-Netzgewirkes ein Rakel oder dergleichen vorgesehen sein, der derart ausgebildet und angeordnet ist, dass ein Teil des dort nach dem Durchführen durch das Bad an dem Textil-Netzgewebe oder Textil-Netzgewirke anhaftenden Beschichtungsmaterials durch diesen entfernbar ist.

Die Erfindung betrifft ebenfalls eine Vorrichtung zur Herstellung eines beschichteten bedruckbaren Textil-Netzgewebes oder Textil-Netzgewirkes, insbesondere zur Durchführung des erfindungsgemäßen Verfahrens, wobei die Vorrichtung eine teilweise in einem Bad mit einem flüssigen Beschichtungsmaterial, insbesondere einer wässrigen Dispersion, befindliche Auftragswalze umfasst, über die das Textil-Netzgewebe oder Textil-Netzgewirke für einen so genannten Flatsch-Auftrag führbar und somit mit dem an der Auftragswalze anhaftenden flüssigen Beschichtungsmaterial, beschichtbar ist, wobei das Beschichtungsmaterial derart ausgebildet ist, dass es an dem Textil-Netzgewebe oder Textil-Netzgewirke anhaftet und die Öffnungen darin verschließt, dass die Vorrichtung weiterhin eine Luftbeaufschlagungsvorrichtung aufweist, an der das Textil-Netzgewebe oder Textil-Netzgewirke nach erfolgter Beschichtung mit dem Beschichtungsmaterial vorbeiführbar ist, wobei diese Luftbeaufschlagungsvorrichtung derart ausgebildet und angeordnet ist, dass das Textil-Netzgewebe oder Textil-Netzgewirke von einer Seite zumindest partiell mit einem Luftstrom derart beaufschlagbar ist, dass in diesem mit dem Luftstrom beaufschlagten Bereich eine erneute Öffnung der durch das Beschichtungsmaterial bisher verschlossenen Öffnungen in dem Textil-Netzgewebe oder Textil-Netzgewirke gegeben ist, und dass die Vorrichtung zudem einen Trockenofen umfasst, durch den das Textil-Netzgewebe oder Textil-Netzgewirke nach erfolgter Beschichtung und zumindest partiell erfolgter Beaufschlagung mit einem Luftstrom zur insbesondere vollständigen Trocknung des Beschichtungsmaterials führbar ist.

Insoweit kann die von dem Luftstrom der Luftbeaufschlagungsvorrichtung auf das Textil-Netzgewebe oder Textil-Netzgewirke wirkende Kraft größer sein als die Kraft der Oberflächenspannung des verwendeten Beschichtungsmaterials, so dass sicher ein Öffnen des Beschichtungsmaterials, welches die Öffnung in dem Textil-Netzgewebe oder Textil-Netzgewirke verschließt, erfolgt.

Vorteilhafterweise kann in dem Bereich, in dem die Luftbeaufschlagungsvorrichtung die eine Seite des Textil-Netzgewebes oder Textil-Netzgewirkes zumindest partiell mit einem Luftstrom beaufschlagt, auf der anderen Seite des Textil-Netzgewebes oder Textil-Netzgewirkes eine weitere Luftbeaufschlagungsvorrichtung zur Stützung des Textil-Netzgewebes oder Textil-Netzgewirkes durch einen weiteren Luftstrom vorgesehen sein. Dabei kann die von dem weiteren Luftstrom auf das Textil-Netzgewebe oder Textil-Netzgewirke wirkende Kraft unterhalb der Oberflächenspannung des verwendeten Beschichtungsmaterials liegen.

Letztlich betrifft die Erfindung auch ein beschichtetes bedruckbares Textil-Netzgewebe oder Textil-Netzgewirke, das insbesondere nach dem erfindungsgemäßen Verfahren und/oder mittels einer erfindungsgemäßen Vorrichtung hergestellt sein kann. Dabei ist das Textil-Netzgewebe oder Textil-Netzgewirke mit einem Beschichtungsmaterial derart versehen, dass die Öffnungen in dem Textil-Netzgewebe oder Textil-Netzgewirke zumindest partiell verschlossenen sind.

Dabei kann das flüssige Beschichtungsmaterial insbesondere als eine wässrige Dispersion ausgebildet sein, die einen Festkörpergehalt von vorzugsweise 40-70% aufweisen. Auch sind bei dem flüssigen Beschichtungsmaterial Lösungsmittelsysteme möglich, wie Polymere, beispielsweise Polyurethane, THV, Acrylate, Ethylenvinylacetate oder aber sowie alle flexiblen und bei Temperaturen von bis zu 180°C härtbaren bzw. zu trocknenden Bindemittel.

Ferner können auch PVC-Plastisole und/oder Gummi-/Kautschucklösungen Verwendung finden. Darüber hinaus sind als Bestandteile des Beschichtungsmaterial auch UV-vernetzende Bindemittel (Acrylate etc.) möglich, wobei der Trockenofen dann durch UV-Strahler gebildet ist bzw. solche umfasst.

Auch können Fluorpolymere, wie z.B.PTFE (Polytetrafluorethylen), PFA (Perfluoralkoxy), FEP (Fluorethylenpropylen), PVDF, MFA etc. zum Einsatz kommen. Da insoweit häufig höhere Temperaturen von bis zu 450°C nötig sind, um die Polymere zu sintern, können Textilien aus Glas oder Aramiden, ggf. auch aus Metallen, verwendet werden.

Die Viskosität des verwendeten flüssigen Beschichtungsmaterials, welches auch eine Mischung sein kann, welche unter anderem wenigstens eine der vorgenannten Materialien beinhaltet, kann von 1000mPas bis 500000 mPas, bevorzugt von 2000 mPas bis 200000 mPas, liegen.

Der Festkörpergehalt des verwendeten flüssigen Beschichtungsmaterials kann bis zu 100% (im Fall von UV-Härtenden Bindemitteln und Plastisolen) betragen, bei wässrigen Dispersionen kann er bevorzugt zwischen 40% und 80% liegen, es ist aber auch ein geringer Festkörpergehalt möglich. Bei Lösungsmittelsystemen ist ein Festkörpergehalt von 10% bis 40% bevorzugt.

Das Material des Textil-Netzgewebes oder Textil-Netzgewirkes kann aus Garnen bestehen, die bevorzugt aus Polyester oder Glasfaser gebildet sind. Es können als Material aber auch Polyamide, PP, PE, Polycarbonate, POM, Baumwolle, Wolle, Leinen, Flachs, Hanf, Metallgarne (z.B. Kupfer, Stahl), Carbonfasern, Basaltfasern und andere Kunst- und Naturfasern oder Mischungen von wenigstens zwei unterschiedlichen Garntypen Verwendung finden.

Das Kett- und/oder Schussgarn kann dabei bevorzugt einen nominalen Titer von 40 dtex bis 6000 dtex aufweisen, wobei der der nominale Titer bevorzugt von 280 dtex bis 1670 dtex, insbesondere von 550 und 1100 dtex, liegt.

Im Fall von Gewirken kann der nominale Titer von 20 dtex bis 400 dtex betragen, bevorzugt von 50 dtex bis 200 dtex, insbesondere von 70 dtex bis 100 dtex betragen. Die Breite des Textil-Netzgewebes oder Textil-Netzgewirkes ist beliebig, sie kann aber bevorzugt von 1 m bis 6 m, insbesondere von 1,40 m bis 5,50 m, betragen.

Bei dem erfindungsgemäßen Verfahren kann das Textil-Netzgewebe oder Textil-Netzgewirke als Warenbahn ausgebildet sein. Es wird dann zunächst abgerollt und durch ein Bad mit dem flüssigen Beschichtungsmaterial geführt. Optional wird hinter dem Tauchbad ein Teil der aufgenommenen Beschichtung einseitig oder beidseitig (bevorzugt) abgerakelt, um einen gleichmäßigen Beschichtungsauftrag zu gewährleisten. Nach diesem Schritte wird Textil-Netzgewebe oder Textil-Netzgewirke ausgebildete in einen Trockenofen geführt, in dem wässrige bzw. Lösungsmittelanteile der Beschichtung evaporiert werden und der Beschichtungsfilm getrocknet wird.

Im Falle von UV-härtenden Beschichtungen erfolgt die Härtung des Bindemittels mittels UV-Strahlern, nachdem evtl. Anteile an wässrigen bzw. Lösungsmittelanteile der Beschichtung in üblicher Weise evaporiert wurden.

Im Fall von Fluorpolymerdispersionen erfolgt nach einem Entfernen von flüchtigen Anteilen ein Sintern oder Schmelzen mit Hilfe von Infrarotstrahlern bei Temperaturen von 250 - 450°C.

Die Geschwindigkeit des Beschichtungsprozesses ist angepasst an die Trocknungskapazität des Trockenofens, d.h. es ist für die Erfindung nicht wichtig, eine bestimmte minimale oder maximale Geschwindigkeit nicht zu über- bzw. zu unterschreiten. Typische Anlagengeschwindigkeiten liegen in der Praxis bei 1-30 m/min, wobei 1,5 m/min bis 7m/min die Regel sind, bei Fluorpolymeren auch Geschwindigkeiten ab 0,5 m/min und darunter. Je höher die Anlagengeschwindigkeit, desto geringer wird die Viskosität des Beschichtungsmediums eingestellt.

Bei dem oben beschriebenen Vorgehen erhält man zunächst ein flächig beschichtetes textiles Netzgewebe oder textiles Netzgewirke, d.h. die Öffnungen werden durch den Beschichtungsfilm komplett überbrückt und man erhält ein "Banner-Material".

Dann wird zwischen dem Beschichtungsauftrag und der Trocknung ein so genanntes "Luftschwert" (oder auch mehrere neben oder hintereinander) eingesetzt. Hierunter versteht man ein Gebläse, mit dem quer zur Laufrichtung der Anlage definiert Luft gegen das mit der Beschichtung benetzte Textil geblasen wird. Durch dieses gezielte Einblasen von Luft wird verhindert, dass die Öffnung im textilen Netzgewebe oder textilen Netzgewirke verschlossen bleiben und man erhält ein beschichtetes Netzgewebe ("Mesh"), wie es im Digitaldruck für großflächige Außenwerbung üblicherweise eingesetzt wird.

Dabei wird die Kraft, welche durch den Luftstrom auf die durch die flüssige Beschichtung geschlossene Öffnung in der Netzstruktur wirkt, so gewählt, dass sie die Oberflächenspannung des Beschichtungsmaterials übersteigt. Somit wird sicher die vormals verschlossene Öffnung in dem textilen Netzgewebe oder textilen Netzgewirke

In ein und demselben textilen Netzgewebe oder textilen Netzgewirke können gleichzeitig Öffnungen unterschiedlicher Größe und Geometrie vorhanden sein. Typische Größen liegen bei 0,1 mm bis 10 mm, wobei Größen von 0,2 mm - 6 mm überwiegen.

Der Luftauslass von zumindest einem Luftschwert kann als Breitschlitzdüse über die gesamte Arbeitsbreite, d. h. die Breite des textilen Netzgewebes oder textilen Netzgewirkes ausgebildet sein, er kann jedoch auch als Abfolge von einzelnen Düsen über die Arbeitsbreite vorgesehen sein, die optional einzeln ansteuerbar sind und entweder eine einheitliche Breite oder aber unterschiedliche Breiten haben können.

Somit kann mit ein und derselben Vorrichtung ohne eine Variation weiterer Parameter möglich, im laufenden Prozess durch an- oder ausschalten der Luftschwerts auf Basis desselben Basismaterials entweder ein Mesh- oder ein Bannermaterial herzustellen, dass digital bedruckt werden kann.

Auch können durch Pulsen der Luft oder mehrfaches Ein- und Ausschalten des Luftschwerts innerhalb des laufenden Beschichtungsprozesses Mischprodukte hergestellt werden, die Abschnittsweise wechseln zwischen der Struktur eines Mesh und der Struktur eines Banners.

Durch Ansteuerung einzelner oder mehrerer Luftdüsen oder Gruppen von Düsen entlang des Luftschwerts ist es auch erreichbar, dass Streifen oder beliebige, insbesondere flächige Muster entlang der Laufrichtung erzeugt werden, die sich durch offene bzw. geschlossene Textilstrukturen unterscheiden.

Kombiniert man mehrere Luftschwerter hintereinander und steuert die Düsen entsprechend angepasst an die Laufgeschwindigkeit der Vorrichtung an, so ist es möglich, selektiv Strukturen frei zu blasen und somit z.B. Muster, Ornamente, Logos, Beschriftungen o.ä. zu erzeugen, welche sich durch offene bzw. geschlossene Textilstrukturen unterscheiden.

Um ein Flattern des textilen Netzgewebes oder des textilen Netzgewirkes oder einen Kontakt des textilen Netzgewebes oder des textilen Netzgewirkes mit Teilen der Vorrichtung infolge eines (zu) starken Luftstroms durch ein oder mehrere Luftschwerter zu verringern oder zu vermeiden, ist es bedarfsweise durch ein oder mehrere Stützgebläse auf der Rückseite des Textils die Textilbahn in ihrem Verlauf zu stabilisieren.

Durch ein wiederholtes Durchführen des erfindungsgemäßen Verfahrens und/oder die Anordnung mehrerer erfindungsgemäßer Vorrichtung hintereinander kann auch ein erfindungsgemäßes textiles Netzgewebe oder textiles Netzgewirke erzielt werden, bei dem wenigstens ein Teilbereich zunächst geschlossene Öffnungen erhält, wobei dann in einem zweiten Schritt (nach erfolgter Trocknung) eine vollflächige Beschichtung mit einem, beispielsweise transparent oder semitransparent ausgebildeten, Material erfolgt. Somit ist die Gesamtheit des textilen Netzgewebe oder textilen Netzgewirke

Nachfolgend werden zwei Beispiele für ein erfindungsgemäßes textiles Netzgewebe oder textiles Netzgewirke beschrieben, welches vorzugsweise mittels des erfindungsgemäßen Verfahrens und/oder durch eine erfindungsgemäße Vorrichtung herstellbar ist:

### Beispiel 1: Digital bedruckbares Netz/Banner-Hybrid

Es handelt sich um eine Netzgewirke aus Polyestergarnen mit 1100 dtex in Kette und Schuss (Kettfadendichte 3,5 pro cm, Schußfadendichte 5,5 pro cm) sowie einem 75 dtex Garn in der Abbindekette. Das Gewirke hat typische Breiten von 3 m bis 5,50 m. Als Beschichtungsmedium dient eine wässrige Polyurethandispersion folgender Zusammensetzung (in Massen%):
50,00 % Polyurethandispersion
33,00 % Flammschutzmittel
7,27 % Titandioxiddispersion (Weißpigment)
1,04 % optischer Aufheller
7,27 % Vernetzungsmittel
1,07 % Verdickungsmittel
0,35 % Ammoniaklösung 25%ig.

Die Beschichtung wird im Tauchverfahren bei einer Anlagengeschwindigkeit von 2-3 m/min aufgetragen, abgerakelt und bei Temperaturen von 160 +/- 20°C für ca. 2-3 Minuten getrocknet und ausgehärtet. Hieraus resultieren Bereiche mit geschlossene Oberfläche. Nach Bedarf erfolgt nach dem Rakel ein Einblasen von Luft durch ein Luftschwert, so dass Bereiche mit offener Oberfläche resultieren.

### Beispiel 2: PTFE-beschichtetes Glasgittergewebe für textile Fassaden oder Unterdecken

Hierbei handelt es sich um ein Netzgewebe aus Glasgarn (415 dtex in Kette und 698 dtex im Schuss) mit einer Kettdichte und einer Schussdichte von jeweils 2 Fäden pro cm. Typische Breiten hierfür sind 1,5 m bis 5,0 m. In der Regel werden bei diesen Produkten mehrere Beschichtungsdurchgänge hintereinander gefahren, um die nötige Schichtdicke aufzubauen. Typisch sind je nach Produkt bis zu 2-8 Beschichtungsdurchgänge. Als Beschichtungsmedium dient hierbei eine wässrige PTFE-Dispersion mit 60% Festkörpergehalt.

Die Beschichtung wird im Tauchverfahren bei einer Anlagengeschwindigkeit von 1,5 m/min aufgetragen, abgerakelt und bei Temperaturen von 200 +/- 20°C für ca. 3 Minuten getrocknet und anschließend für 3 min bei 320-400°C gesintert. Hieraus resultieren Bereiche mit geschlossener Oberfläche. Nach Bedarf erfolgt nach dem Rakel ein Einblasen von Luft durch ein Luftschwert, so dass Bereiche mit offener Oberfläche resultieren.

Im Folgenden werden in den Zeichnungen dargestellte Ausführungsbeispiele der Erfindung erläutert. Es zeigen:
- Fig. 1: ein erstes Ausführungsbeispiel einer erfindungsgemäßen Vorrichtung und
- Fig. 2: ein zweites Ausführungsbeispiel einer erfindungsgemäßen Vorrichtung.

In allen Figuren werden für gleiche bzw. gleichartige Bauteile übereinstimmende Bezugszeichen verwendet.

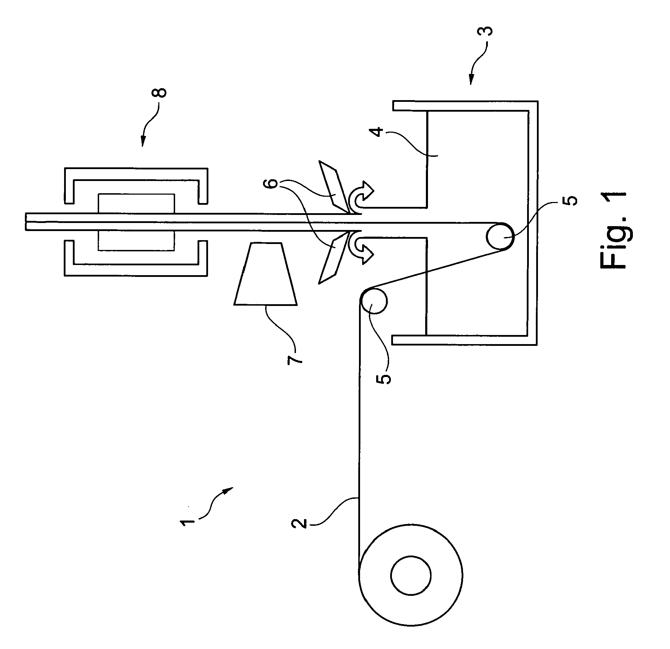

Fig. 1 zeigt eine Vorrichtung 1 zur Herstellung eines beschichteten bedruckbaren Textil-Netzgewebes oder Textil-Netzgewirkes 2, wobei die Vorrichtung 1 ein Bad 3 mit einem flüssigen Beschichtungsmaterial 4 aufweist.

Dabei wird das Textil-Netzgewebe oder Textil-Netzgewirke 2 mittels einer entsprechenden Führungsanordnung 5 durch das Bad 3 geführt, wobei das Beschichtungsmaterial 4 derart ausgebildet ist, dass es an dem Textil-Netzgewebe oder Textil-Netzgewirke 2 anhaftet und die in der Zeichnung nicht dargestellten Öffnungen darin verschließt.

Anschließend sind auf beiden Seiten des Textil-Netzgewebes oder Textil-Netzgewirkes 2 Rakel 6 vorgesehen, die derart ausgebildet und angeordnet sind, dass ein Teil des dort nach dem Durchführen durch das Bad 3 an dem Textil-Netzgewebe oder Textil-Netzgewirke 2 anhaftenden Beschichtungsmaterials 4 entfernt wird.

Weiterhin weist die Vorrichtung 1 eine in Förderrichtung nach den Rakeln 6 vorgesehene Luftbeaufschlagungsvorrichtung 7 auf, an der das Textil-Netzgewebe oder Textil-Netzgewirke 2 nach erfolgter Beschichtung mit dem Beschichtungsmaterial 4 vorbei geführt wird. Dabei ist diese Luftbeaufschlagungsvorrichtung 7 derart ausgebildet und angeordnet, dass das Textil-Netzgewebe oder Textil-Netzgewirke 2 von einer Seite zumindest partiell mit einem Luftstrom derart beaufschlagbar ist, dass in diesem mit dem Luftstrom beaufschlagten Bereich eine erneute Öffnung der durch das Beschichtungsmaterial 4 bisher verschlossenen Öffnungen in dem Textil-Netzgewebe oder Textil-Netzgewirke 2 gegeben ist.

Zusätzlich umfasst die Vorrichtung 1 einen Trockenofen 8, durch den das Textil-Netzgewebe oder Textil-Netzgewirke 2 nach erfolgter Beschichtung und zumindest partiell erfolgter Beaufschlagung mit einem Luftstrom zur insbesondere vollständigen Trocknung des Beschichtungsmaterials 4 geführt wird.

Somit resultiert ein Textil-Netzgewebe oder Textil-Netzgewirke 2, welches teilweise offene und teilweise durch das Beschichtungsmaterial 4 geschlossene Öffnungen aufweist.

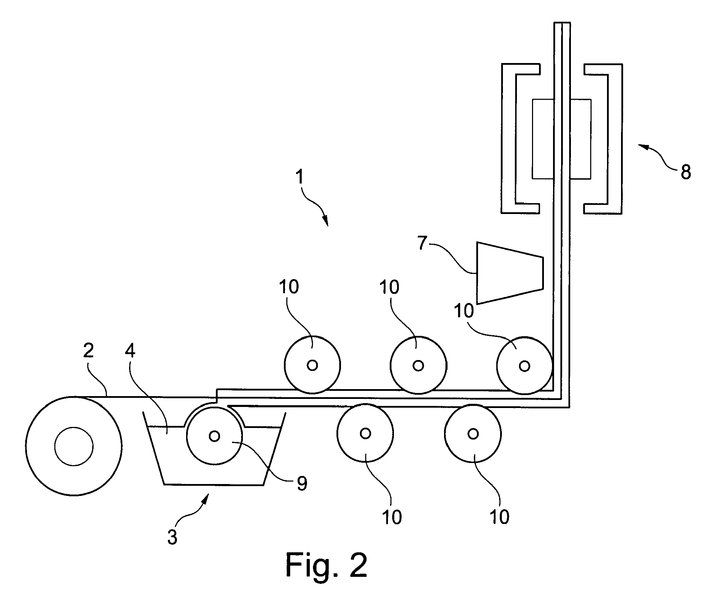

In Fig. 2 ist ein alternatives Ausführungsbeispiel einer erfindungsgemäßen Vorrichtung 1 dargestellt, wobei diese auch eine teilweise in einem Bad 3 mit einem flüssigen Beschichtungsmaterial 4 befindliche Auftragswalze 9 umfasst. Über diese Auftragswalze 9 wird das Textil-Netzgewebe oder Textil-Netzgewirke 2 für einen so genannten Flatsch-Auftrag geführt und somit mit dem an der Auftragswalze 9 anhaftenden flüssigen Beschichtungsmaterial 4 beschichtet.

Auch hier ist das Beschichtungsmaterial 4 derart ausgebildet, dass es an dem Textil-Netzgewebe oder Textil-Netzgewirke 2 anhaftet und die Öffnungen darin verschließt.

Weiterhin umfasst die Vorrichtung 1 auf beiden Seiten des Textil-Netzgewebes oder Textil-Netzgewirkes 2 Egalisierungswalzen 10, durch die aus dem Tauchbad-Auftrag resultierende Ungenauigkeiten bei dem Auftrag des Beschichtungsmaterials 4 ausgeglichen werden.

Der weitere Aufbau entspricht dem Ausführungsbeispiel gemäß der Fig. 1.

## Patentansprüche

1. Verfahren zur Herstellung eines beschichteten bedruckbaren Textil-Netzgewebes oder Textil-Netzgewirkes (2), **dadurch gekennzeichnet, dass** das Textil-Netzgewebe oder Textil-Netzgewirke (2) zunächst durch ein Bad (3) mit einem flüssigen Beschichtungsmaterial (4), insbesondere einer wässrigen Dispersion, geführt wird, wodurch das Beschichtungsmaterial (4) an dem Textil-Netzgewebe oder Textil-Netzgewirke (2) anhaftet und die Öffnungen darin verschließt, und dass anschließend das Textil-Netzgewebe oder Textil-Netzgewirke (2) von einer Seite des Textil-Netzgewebes oder Textil-Netzgewirkes (2) zumindest partiell mit einem Luftstrom derart beaufschlagt wird, dass in diesem mit dem Luftstrom beaufschlagten Bereich die durch das Beschichtungsmaterial (4) verschlossenen Öffnungen in dem Textil-Netzgewebe oder Textil-Netzgewirke (2) wieder geöffnet werden, und dass danach das Textil-Netzgewebe oder Textil-Netzgewirke (2) zur insbesondere vollständigen Trocknung des Beschichtungsmaterials (4) durch einen Trockenofen (8) geführt wird.

2. Verfahren nach dem vorhergehenden Anspruch, **dadurch gekennzeichnet, dass** auf zumindest einer Seite des Textil-Netzgewebes oder Textil-Netzgewirkes (2) ein Teil des dort nach dem Durchführen durch das Bad (3) anhaftenden Beschichtungsmaterials (4) durch einen Rakel (6) oder dergleichen entfernt wird.

3. Verfahren zur Herstellung eines beschichteten bedruckbaren Textil-Netzgewebes oder Textil-Netzgewirkes (2), **dadurch gekennzeichnet, dass** das Textil-Netzgewebe oder Textil-Netzgewirke (2) zunächst mittels eines so genannten Flatsch-Auftrages durch Führen über eine teilweise in einem Bad (3) mit einem flüssigen Beschichtungsmaterial (4) befindliche Auftragswalze (9) mit dem an der Auftragswalze (9) anhaftenden flüssigen Beschichtungsmaterial (4), insbesondere einer wässrigen Dispersion, beschichtet wird, wobei das an dem Textil-Netzgewebe oder Textil-Netzgewirke (2) anhaftende Beschichtungsmaterial (4) die Öffnungen darin verschließt, und dass anschließend das Textil-Netzgewebe oder Textil-Netzgewirke (2) von einer Seite des Textil-Netzgewebes oder Textil-Netzgewirkes (2) zumindest partiell mit einem Luftstrom derart beaufschlagt wird, dass in diesem mit dem Luftstrom beaufschlagten Bereich die durch das Beschichtungsmaterial (4) verschlossenen Öffnungen in dem Textil-Netzgewebe oder Textil-Netzgewirke (2) wieder geöffnet werden, und dass danach das Textil-Netzgewebe oder Textil-Netzgewirke (2) zur insbesondere vollständigen Trocknung des Beschichtungsmaterials (4) durch einen Trockenofen (8) geführt wird.

4. Verfahren nach einem der vorhergehenden Ansprüche, **dadurch gekennzeichnet, dass** auf zumindest einer Seite des Textil-Netzgewebes oder Textil-Netzgewirkes (2) ein Teil des dort, insbesondere nach dem Führen über die Auftragswalze (9), anhaftenden Beschichtungsmaterials (4) durch wenigstens eine Egalisierungswalze (10) oder dergleichen entfernt oder zumindest gleichmäßig verteilt wird.

5. Verfahren nach einem der vorhergehenden Ansprüche, **dadurch gekennzeichnet, dass** die von dem Luftstrom auf das Textil-Netzgewebe oder Textil-Netzgewirke (2) wirkende Kraft oberhalb der Oberflächenspannung des verwendeten Beschichtungsmaterials (4) liegt.

6. Verfahren nach dem vorhergehenden Anspruch, **dadurch gekennzeichnet, dass** in dem Bereich, in dem die eine Seite des Textil-Netzgewebes oder Textil-Netzgewirkes (2) zumindest partiell durch den Luftstrom beaufschlagt ist, eine die andere Seite des Textil-Netzgewebes oder Textil-Netzgewirkes (2) beaufschlagende Stützung durch einen weiteren Luftstrom erfolgt.

7. Verfahren nach dem vorhergehenden Anspruch, **dadurch gekennzeichnet, dass** die von dem weiteren Luftstrom auf das Textil-Netzgewebe oder Textil-Netzgewirke (2) wirkende Kraft unterhalb der Oberflächenspannung des verwendeten Beschichtungsmaterials (4) liegt.

8. Vorrichtung (1) zur Herstellung eines beschichteten bedruckbaren Textil-Netzgewebes oder Textil-Netzgewirkes (2), insbesondere zur Durchführung des Verfahrens nach einem der vorhergehenden Ansprüche, **dadurch gekennzeichnet, dass** die Vorrichtung (1) ein Bad (3) mit einem flüssigen Beschichtungsmaterial (4), insbesondere einer wässrigen Dispersion, aufweist, durch welches das Textil-Netzgewebe oder Textil-Netzgewirke (2) mittels einer entsprechenden Führungsanordnung (5) zunächst durchführbar ist, wobei das Beschichtungsmaterial (4) derart ausgebildet ist, dass es an dem Textil-Netzgewebe oder Textil-Netzgewirke (2) anhaftet und die Öffnungen darin verschließt, dass die Vorrichtung (1) weiterhin eine Luftbeaufschlagungsvorrichtung (7) aufweist, an der das Textil-Netzgewebe oder Textil-Netzgewirke (2) nach erfolgter Beschichtung mit dem Beschichtungsmaterial (4) vorbeiführbar ist, wobei diese Luftbeaufschlagungsvorrichtung (7) derart ausgebildet und angeordnet ist, dass das Textil-Netzgewebe oder Textil-Netzgewirke (2) von einer Seite zumindest partiell mit einem Luftstrom derart beaufschlagbar ist, dass in diesem mit dem Luftstrom beaufschlagten Bereich eine erneute Öffnung der durch das Beschichtungsmaterial bisher verschlossenen Öffnungen in dem Textil-Netzgewebe oder Textil-Netzgewirke (2) gegeben ist, und dass die Vorrichtung (1) zudem einen Trockenofen (8) umfasst, durch den das Textil-Netzgewebe oder Textil-Netzgewirke (2) nach erfolgter Beschichtung und zumindest partiell erfolgter Beaufschlagung mit einem Luftstrom zur insbesondere vollständigen Trocknung des Beschichtungsmaterials (4) führbar ist.

9. Vorrichtung (1) nach dem vorhergehenden Anspruch, **dadurch gekennzeichnet, dass** zwischen Bad (3) und Luftbeaufschlagungsvorrichtung (7) auf zumindest einer Seite des Textil-Netzgewebes oder Textil-Netzgewirkes (2) ein Rakel (6) oder dergleichen vorgesehen ist, der derart ausgebildet und angeordnet ist, dass ein Teil des dort nach dem Durchführen durch das Bad (3) an dem Textil-Netzgewebe oder Textil-Netzgewirke (2) anhaftenden Beschichtungsmaterials (4) durch diesen entfernbar ist.

10. Vorrichtung (1) zur Herstellung eines beschichteten bedruckbaren Textil-Netzgewebes oder Textil-Netzgewirkes (2), insbesondere zur Durchführung des Verfahrens nach einem der vorhergehenden Ansprüche, **dadurch gekennzeichnet, dass** die Vorrichtung (1) eine teilweise in einem Bad (3) mit einem flüssigen Beschichtungsmaterial (4), insbesondere einer wässrigen Dispersion, befindliche Auftragswalze (9) umfasst, über die das Textil-Netzgewebe oder Textil-Netzgewirke (2) für einen so genannten Flatsch-Auftrag führbar und somit mit dem an der Auftragswalze (9) anhaftenden flüssigen Beschichtungsmaterial (4), beschichtbar ist, wobei das Beschichtungsmaterial (4) derart ausgebildet ist, dass es an dem Textil-Netzgewebe oder Textil-Netzgewirke (2) anhaftet und die Öffnungen darin verschließt, dass die Vorrichtung (1) weiterhin eine Luftbeaufschlagungsvorrichtung (7) aufweist, an der das Textil-Netzgewebe oder Textil-Netzgewirke (2) nach erfolgter Beschichtung mit dem Beschichtungsmaterial (4) vorbeiführbar ist, wobei diese Luftbeaufschlagungsvorrichtung (7) derart ausgebildet und angeordnet ist, dass das Textil-Netzgewebe oder Textil-Netzgewirke (2) von einer Seite zumindest partiell mit einem Luftstrom derart beaufschlagbar ist, dass in diesem mit dem Luftstrom beaufschlagten Bereich eine erneute Öffnung der durch das Beschichtungsmaterial (4) bisher verschlossenen Öffnungen in dem Textil-Netzgewebe oder Textil-Netzgewirke (2) gegeben ist, und dass die Vorrichtung (1) zudem einen Trockenofen (8) umfasst, durch den das Textil-Netzgewebe oder Textil-Netzgewirke (2) nach erfolgter Beschichtung und zumindest partiell erfolgter Beaufschlagung mit einem Luftstrom zur insbesondere vollständigen Trocknung des Beschichtungsmaterials (4) führbar ist.

11. Vorrichtung (1) nach einem der Ansprüche 8 bis 10, **dadurch gekennzeichnet, dass** die von dem Luftstrom der Luftbeaufschlagungsvorrichtung (7) auf das Textil-Netzgewebe oder Textil-Netzgewirke (2) wirkende Kraft größer ist als die Kraft der Oberflächenspannung des verwendeten Beschichtungsmaterials (4).

12. Vorrichtung (1) nach dem vorhergehenden Anspruch, **dadurch gekennzeichnet, dass** in dem Bereich, in dem die Luftbeaufschlagungsvorrichtung (7) die eine Seite des Textil-Netzgewebes oder Textil-Netzgewirkes (2) zumindest partiell mit einem Luftstrom beaufschlagt, auf der anderen Seite des Textil-Netzgewebes oder Textil-Netzgewirkes (2) eine weitere Luftbeaufschlagungsvorrichtung (7) zur Stützung des Textil-Netzgewebes oder Textil-Netzgewirkes (2) durch einen weiteren Luftstrom vorgesehen ist.

13. Vorrichtung (1) nach dem vorhergehenden Anspruch, **dadurch gekennzeichnet, dass** die von dem weiteren Luftstrom auf das Textil-Netzgewebe oder Textil-Netzgewirke (2) wirkende Kraft unterhalb der Oberflächenspannung des verwendeten Beschichtungsmaterials (4) liegt.

14. Beschichtetes bedruckbares Textil-Netzgewebe oder Textil-Netzgewirke (2), insbesondere hergestellt mit dem Verfahren nach einem der Ansprüche 1 bis 7 und/oder mittels einer Vorrichtung (1) nach einem der Ansprüche 8 bis 13, **dadurch gekennzeichnet, dass** das Textil-Netzgewebe oder Textil-Netzgewirke (2) mit einem Beschichtungsmaterial (4) derart versehen ist, dass die Öffnungen darin zumindest partiell, insbesondere nur ein Teil der Öffnungen, verschlossenen sind.
